# EUROPÄISCHE PATENTSCHRIFT

(11) **EP 2 840 333 B1**
(45) Veröffentlichungstag und Bekanntmachung des Hinweises auf die Patenterteilung: **08.11.2017**
(21) Anmeldenummer: 13181418.8
(22) Anmeldetag: 22.08.2013
(51) Int. Cl.: F24J 3/08

(54) **Verfahren zur Herstellung von U-förmigen Erdwärmesonden**
Method for the preparation of U-shaped geothermal energy probes
Procédé de fabrication de sondes d'échauffement de la terre en forme de U

(43) Veröffentlichungstag der Anmeldung: 25.02.2015
(73) Patentinhaber: MKM Mansfelder Kupfer und Messing GmbH, 06333 Hettstedt (DE)
(72) Erfinder: Göderitz, René, 06311 Helbra (DE); Kiefuß, Ramon, 06449 Aschersleben (DE)
(74) Vertreter: Weidner Stern Jeschke

(56) Entgegenhaltungen:
- EP-A1- 2 312 237
- DE-U1-202007 011 565
- US-A1- 2008 016 894

## Beschreibung

Die Erfindung bezieht sich auf ein Verfahren zur Herstellung von U-förmigen Erdwärmesonden aus aufwickelbarem kunststoffummantelten Kupferrohr. gemäß dem Gegenstand des Anspruchs 1. Erdwärmesonden bestehen aus einer Rohrleitung die dazu dient, die im Erdboden vorhandene Wärme auf das in der Rohrleitung befindliche Wärmeträgermedium zu übertragen. Dabei wird ausgenutzt, dass im Erdboden ab etwa 10 m Tiefe eine konstante bzw. etwa mit 1K pro 30 m Tiefe ansteigende Temperatur herrscht.

Ist das Wärmeträgermedium kälter als die herrschende Bodentemperatur, so nimmt es Wärme aus dem Boden auf. Je besser die Wärmeleitfähigkeit der Rohrwandung, umso schneller wird die Wärme übertragen.

Zur Nutzung von Erdwärme ist es erforderlich das Bohrloch lotrecht in den Boden einzubringen. Das Dokument US2008016894 offenbart eine Erdwärmesonde mit einer Schutzhülle aus einem Schrumpfschlauchstück. Es zeigt zusätzlich die Merkmale c), d), e) und i) des Anspruchs 1. Die Bohrtiefe sollte mindestens 100 m betragen und reicht bis zu Tiefen von ca. 400 m. Die genaue Tiefe des Bohrloches hängt von den örtlichen Verhältnissen (Bodenhorizonte), dem Wärmebedarf und der Art der Erdwärmesonde ab.

U-förmige Erdwärmesonden bestehen aus zwei parallel geführten Rohrleitungen, z.B. aus Metall oder Kunststoff, die an einem Ende durch einen U-förmigen Rohrbogen, ein sogenannter Fuß, miteinander verbunden sind. Dieser Fuß der Erdwärmesonde wird in das Bohrloch bis zum Grund eingeführt. Das Bohrloch wird anschließend mit einem Dichtungsmittel verfüllt.

Die oberen Rohrleitungsenden werden an den Wärmetauscher einer Wärmepumpe angeschlossen. Der Wärmeträger wird z.B. von einer Pumpe (Vorlauf) zur Erdwärmesonde transportiert, durchströmt die Sonde und kehrt über die Rücklaufleitung zum Wärmetauscher zurück.

Gemäß einer anderen Ausführung der Erdwärmesonde ist diese direkt als Verdampfer an der Wärmepumpe angeschlossen. Der Wärmeträger bzw. das Kältemittel gelangt flüssig in die zuführende Rohrleitung, verdampft auf dem Wege in das Erdreich und gelangt als Dampf in der abführenden Rohrleitung wieder zur Wärmepumpe zurück.

Zur Herstellung derartiger Erdwärmesonden aus PE-ummanteltem Kupferrohr ist es aus der Praxis bekannt, das auf einer Trommel in doppelter Montagelänge aufgewickelte Rohr bis zur Hälfte der Länge abzuwickeln, an dieser Stelle die Rohrleitung in die U-Form zu biegen und anschließend beide Rohrleitungen wieder auf die Trommel aufzuwickeln, derart, dass die U-Form am Ende frei liegt. Nach der Konfektionierung der U-Form mit einem Schutzschlauch wird das Coil zur Baustelle transportiert und die Erdwärmesonde in das vorbereitete Bohrloch eingeführt.

Beim Biegen der U-Form wird der PE-Mantel gereckt und gestaucht, wodurch die Gefahr besteht, dass sich zu einem späteren Zeitpunkt Risse bilden können, die zu thermischen Schädigungen des verlegten Rohres führen.

Da die Sonde aus einem Rohr besteht, ist dieses hinsichtlich Wanddicke und Durchmesser entsprechend materialintensiv auszulegen, um während der Einführung in das Bohrloch Beschädigungen am U-förmigen Abschnitt zu vermeiden und die hinsichtlich der Strömungsgeschwindigkeit gestellten Anforderungen zu erfüllen.

Der Erfindung liegt die Aufgabe zugrunde, ein Verfahren zur Herstellung von U-förmigen Erdwärmesonden aus aufwickelbarem kunststoffummanteltem Kupferrohr zu schaffen, das zu erheblichen Einsparungen an Material und Kosten sowie verbesserten anwendungstechnischen Eigenschaften der Sonde führt.

Erfindungsgemäß wird die Aufgabe durch die im Anspruch 1 angegebenen Merkmale gelöst. Vorteilhafte Weiterbildungen sind Gegenstand der Ansprüche 2 bis 15.

Gemäß der vorgeschlagenen Verfahrensweise werden zwei kunststoffummantelte Kupferrohre in entsprechend vorgegebener Montagelänge synchron auf eine Trommel aufgewickelt.

Die Länge der Rohre entspricht in etwa der Tiefe des Bohrloches zum Einbringen der Sonde. Die Herstellung der Erdwärmesonden erfolgt vorzugsweise unmittelbar beim Hersteller der Kupferrohre.

Zuerst werden die beiden freien Enden der auf der Trommel aufgewickelten Kupferrohre abisoliert, beispielsweise ca. 2 cm, sodass zwei blanke Kupferrohrendabschnitte vorliegen.

Auf jedes der abisolierten Enden der Kupferrohre wird ein Schrumpfschlauchstück aufgeschoben, derart, dass die abisolierten Endabschnitte der Kupferrohre frei bleiben.

Die beiden Schrumpfschlauchstücke sollten in ihrer Länge so bemessen sein, dass sie das gesamte U-förmige Rohrstück umschließen, sich geringfügig überlappen und den Anfang der PE-Ummantelung der beiden Kupferrohre überdecken bzw. umschließen.

Als Alternative kann auch nur ein einzelnes Schrumpfschlauchstück zum Einsatz kommen. Dieses sollte mindestens so lang sein, dass es im aufgezogenen Zustand das gesamte U-förmige Rohrstück und die Verbindungsstellen zwischen dem Rohrstück und den Enden der Kupferrohre sowie den Anfang der PE-Ummantelung vollständig umgibt.

Bei Einsatz von zwei gleichlangen Schrumpfschlauchstücken können diese kürzer sein und müssen im aufgezogenen Zustand nicht das gesamten U-förmige Rohrstück umschließen.

Dieses einzelne Schrumpfschlauchstück wird auf ein Kupferrohr aufgeschoben und zwar soweit, dass der blanke Kupferrohrendabschnitt nicht mit überdeckt wird, sondern frei bleibt, um die Montage des U-förmigen Rohrstückes aus Kupfer zu ermöglichen.

Auf die beiden blanken Kupferrohrendabschnitte wird ein separat hergestelltes U-förmiges Rohrstück aus Kupfer geschoben, fixiert und druckdicht mit den Kupferrohrendabschnitten verbunden.

Hierzu werden gemäß einer ersten Ausführungsmöglichkeit die Enden des U-förmigen Rohrstückes oder der Kupferrohrendabschnitte passgenau aufgeweitet und Kupferrohrendabschnitte sowie U-förmiges Rohrstück miteinander verbunden.

Gemäß einer zweiten Ausführungsvariante werden die Enden des U-förmigen Rohrstückes und der Kupferrohrendabschnitte mittels einer Muffe oder Hülse verbunden. Entsprechend einer dritten Ausführungsvariante wird ein U-förmiges Rohrstück mit einem Innendurchmesser eingesetzt, der größer ist als der Außendurchmesser der Kupferrohrendabschnitte. Die Enden des U-förmigen Rohrstückes werden dann passgenau auf die blanken Kupferohrendabschnitte aufgeschoben und miteinander verbunden.

Die Verbindungen zwischen dem U-förmigen Rohrstück und den blanken Kupferrohrendabschnitten bzw. mit der als Zwischenstück eingesetzten Muffe aus Kupfer können mittels Schweißen, Löten oder Crimpen vorgenommen werden.

Die Wanddicke des U-förmigen Rohrstückes kann bis zu 20 % größer sein als die Wanddicke der Kupferrohrendabschnitte.

Aufgrund unterschiedlicher Strömungsquerschnitte verringert sich die Strömungsgeschwindigkeit im U-förmigen Bogen und dadurch der strömungsbedingte Verschleiß. Nach Herstellung der Verbindungen zwischen dem U-förmigen Rohrstück und den blanken Kupferrohrendabschnitten werden die Schrumpfschlauchstücke soweit zurückgeschoben, dass diese das U-förmige Rohrstück, die vorhandene PE-Ummantelung und die Verbindungsstellen zwischen dem U-förmige Rohrstück und den Enden der Kupferrohre vollständig überdecken.

Bei Verwendung eines einzelnen Schrumpfschlauchstückes wird dieses soweit zurückgeschoben, dass das U-förmige Rohrstück vollständig, die Verbindungsstellen und der Anfang der PE-Ummantelung der beiden Kupferrohre, umschlossen bzw. überdeckt sind. Anschließend werden die aufgezogenen Schrumpfschlauchstücke erwärmt und aufgeschrumpft.

Danach wird auf den U-förmigen Rohrsondenabschnitt eine vorgefertigte Kunststoffkappe aus schrumpfbarem Kunststoffmaterial bis zur Überdeckung der Verbindungsstellen aufgeschoben und durch Erwärmung aufgeschrumpft.

Der Innenraum der Kunststoffkappe wird mit einem gießfähigen Kunststoffmaterial als Vergußmasse ausgegossen.

Nach erfolgter Aushärtung wird das restliche Ende der Kupferrohre der fertigen Erdwärmesonde wieder auf die Trommel aufgewickelt.

Die Erwärmung der aufgezogenen Schrumpfschlauchstücke und der Kunststoffkappe können mittels Heißluft erfolgen. Der Schrumpfvorgang erfolgt beispielsweise bei Heißlufttemperaturen von ca. 100 °C. Das eingesetzte Material für den Warmschrumpfschlauch und die Warmschrumpfkappe ist so beschaffen, dass bei diesen Temperaturen keine Materialschädigungen entstehen.

Kunststoff- bzw. Warmschrumpfkappe und Schrumpfschlauch sollten vorzugsweise aus demselben Material bestehen.

Vorteilhaft ist es, wenn Schrumpfschlauchstücke eingesetzt werden, die an ihrer Innenseite mit einem Klebstoff beschichtet sind, der während des Schrumpfens flüssig wird. Dadurch wird nach dem Erkalten eine dauerhafte Abdichtung zwischen der PE-Ummantelung, dem U-förmigen Rohrstück und dem Schrumpfschlauch erreicht.

Der Schrumpfschlauch bzw. die Schrumpfschlauchstücke bestehen vorzugsweise aus einem Polyolefin, wie z.B. Polypropylen oder Polyethylen.

Die Wanddicke des ummantelten Kupferrohres wird in Abhängigkeit vom auftretenden Rohrinnendruck bestimmt.

Die Erdwärmesonde sollte so ausgeführt werden, dass die Kunststoffummantelung auf dem Medium abführenden Kupferrohr einen höheren Wärmewiderstand als die Kunststoffummantelung auf dem Medium zuführenden Kupferrohr aufweist.

Das U-förmige Rohrstück sollte aus einer Kupferlegierung hergestellt werden, die im Vergleich zu der Kupferlegierung der Kupferrohre eine höhere Verschleißbeständigkeit besitzt.

Die vorgeschlagene Verfahrensweise ermöglicht eine Verringerung der Querschnitte der Rohrleitungen der Erdwärmesonde. Dies führt nicht nur zur Einsparung an Kupfermaterial sondern auch an Wärmeträgermittel.

Im Vergleich zu herkömmlichen Rohrleitungen für Erdwärmesonden können nunmehr Rohre mit einem um bis zu 50 % geringeren Durchmesser eingesetzt werden.

Der geringere Materialeinsatz für Erdwärmesonden führt zu erheblichen Kosteneinsparungen. Die Wanddicken der Kupferrohrleitungen müssen in ihren Wanddicken nur noch so bemessen sein, dass diese dem herrschenden Innendruck standhalten.

Je geringer die Wanddicke der ummantelten Kupferrohre, desto wirksamer ist Wärmeübertragung.

Ein weiterer Vorteil ist, dass die ummantelten Kupferrohre zur Herstellung der Erdwärmesonde nur einmal auf eine Trommel aufgewickelt werden müssen. Da die zwei Rohre parallel und synchron aufgewickelt werden, entstehen beim Abwickeln vor Ort auf der Baustelle keine Probleme.

Aufgrund der stoffschlüssigen Verbindung zwischen der Ummantelung des U-förmigen Rohrbogens und der angrenzenden Ummantelung der Kupferrohre wird eine hohe Dichtheit im Bereich der Verbindungsstellen zwischen den Rohren und dem U-förmigen Bogen gewährleistet.

Die Erfindung wird nachfolgend an einem Ausführungsbeispiel näher erläutert.

In der zugehörigen Zeichnung zeigen:
- Fig. 1: einzelne Verfahrensstufen zur Herstellung einer U-förmigen Erdwärmesonde in vereinfachter Darstellung und
- Fig. 2: einen Schnitt gemäß der Linie A-A in Fig. 1.

Ausgehend von den technischen Anforderungen des Montagebetriebes für Erdsonden werden zwei PE-ummantelte Kupferrohre 2 und 3, z.B. mit einem Außendurchmesser von 16 mm und einer Wanddicke von 0,5 mm, in der gewünschten Länge (z.B. 100 m) hergestellt und auf eine Trommel 1 gewickelt.

Die freien Enden der ummantelten Kupferrohre 2 und 3 werden ein Stück abgewickelt, z.B. 1 bis 2 m, und auf jedes der beiden Enden wird ein wärmeschrumpfbares Schlauchstück 4a und 4b, das in seinem Durchmesser auf den Außendurchmesser der Kupferrohre 2 und 3 abgestimmt ist, aufgeschoben, soweit, dass die vorderen Enden in einer Länge von ca. 5 cm frei bleiben. Diese werden nachfolgend abisoliert.

Selbstverständlich können die beiden Enden der ummantelten Kupferrohre 2 und 3 auch bereits vor dem Aufschieben der beiden Schrumpfschlauchstücke 4a und 4b abisoliert werden.

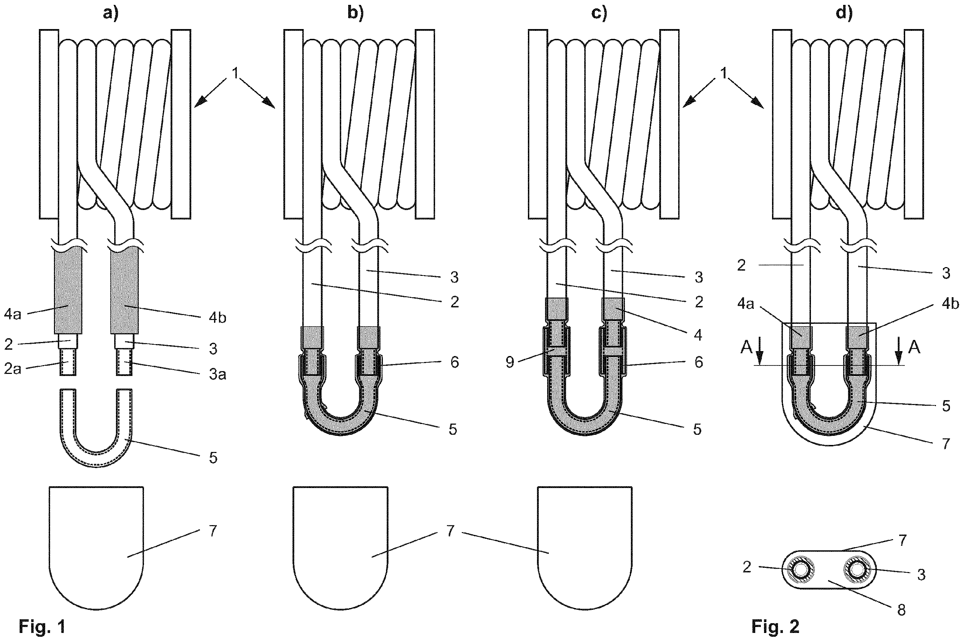

Anstelle von zwei Schrumpfschlauchstücken kann auch ein Schrumpfschlauchstück 4 eingesetzt werden, dass in seiner Länge so bemessen ist, dass es das gesamte U-bogenförmige Rohrstück 5 umgibt und an beiden Kupferrohrendabschnitten den Anfang der PE-Ummantelung überdeckt, wie in Fig. 1, Abb. c), gezeigt.

In der Fig. 1, Abbildung a), sind die Trommel 1 mit den zwei abgewickelten Kupferrohren 2 und 3, mit abisolierten Enden 2a und 3a, aufgezogenen Schrumpfschlauchstücken 4a und 4b sowie ein U-bogenförmiges Rohrstück 5 und eine taschenförmige Kunststoffkappe 7 als Einzelteile gezeigt.

Nach dem Aufschieben der beiden Schrumpfschlauchstücke 4a und 4b oder eines einzelnen Schrumpfschlauchstückes 4 auf ein bzw. die beiden abisolierten Rohrenden 2a und 3a wird ein vorgefertigtes U-bogenförmiges Rohrstück 5 aus blankem Kupfer (Außendurchmesser 16,4 mm, Wanddicke 0,8 mm) aufgeschoben und mit den abisolierten Rohrenden 2a und 3a verlötet. In Figur 1 ist die Lötstelle mit dem Bezugszeichen 6 gekennzeichnet.

Beim Löten ist darauf zu achten, dass die Lötfuge mit einem Lot gefüllt wird, das hitze-und korrosionsbeständig gegenüber dem eingesetzten Wärmeträgermedium ist. Die Hitzebeständigkeit ist aufgrund der nachfolgenden Ummantelung erforderlich.

Zur Verbindung der abisolierten Rohrenden 2a, 3a mit dem U-bogenförmiges Rohrstück 5 können auch andere Fügeverfahren, wie z.B. Crimpen oder Schweißen zum Einsatz kommen.

Nach dem Verbinden der Rohrenden 2a, 3a mit dem U-bogenförmigen Rohrstück 5 werden die wärmeschrumpfbaren Schlauchstücke 4a und 4b wieder in entgegengesetzter Richtung zurückgeschoben, soweit, dass diese das U-bogenförmige Rohrstückes 5, die Verbindungs- bzw. Lötstelle 6 und der Anfang der PE-Ummantelung der beiden Kupferrohre 2 und 3 überdeckt werden, wie in Fig. 1, Abb. b), gezeigt. An den aneinanderstoßenden Enden wird das eine Schlauchstück geringfügig über das andere Schlauchstück geschoben, so dass eine Überlappung vorliegt, wie in Abb. b) angedeutet.

Wird nur ein wärmeschrumpfbares Schlauchstück 4 eingesetzt, so wird dieses auf ein Kupferrohr 2 aufgeschoben, wobei das abisolierte Ende 2a freibleibt. Nach der Befestigung des U-bogenförmiges Rohrstückes 5 wird das Schlauchstück 4 in entgegengesetzter Richtung zurückgeschoben, so weit bis das gesamte U-bogenförmige Rohrstück 5, das gegenüberliegende Ende des anderen Kupferrohres 3 und der Anfang der PE-Ummantelung umschlossen sind (Fig. 1. Abb. c)).

In Fig. 1, Abbildungen b) und c), ist das an den Enden der Kupferrohre 2 und 3 befestigte U-bogenförmige Rohrstück 5 gezeigt. Die Abbildung c) unterscheidet sich von der Abbildung b) dadurch, dass die abisolierten Enden 2a, 3a der Kupferrohre 2 und 3 über eine Muffe bzw. Hülse 6 mit dem U-bogenförmigen Rohrstück 5 verbunden sind und anstelle zweier Schrumpfschlauchstücke nur ein Schrumpfschlauchstück 4 aufgezogen ist.

Das eingesetzte Schrumpfschlauchstück 4 oder die beiden Schrumpfschlauchstücke 4a und 4b bestehen aus einem Polyolefin, gemäß diesem Beispiel aus Polyethylen.

Die Schrumpfschlauchstück 4, 4a und 4b sind in ihrer Innenseite mit einer Klebstoffbeschichtung ausgerüstet.

Während des nachfolgenden Schrumpfvorganges mittels Heißluft mit einer Temperatur von ca. 100 °C wird der Klebstoff flüssig und gewährleistet nach dem Erkalten eine dauerhafte Verbindung und Abdichtung zwischen der PE-Ummantelung, dem U-förmigen Rohrstück und dem Schrumpfschlauch.

Im nächsten Arbeitsschritt wird auf den U-förmigen Rohrsondenabschnitt eine vorgefertigte taschenförmige Kunststoffkappe 7, die aus dem gleichen Kunststoffmaterial wie die Schrumpfschlauchstücke besteht, aufgesetzt. Die vorgefertigte Kunststoffkappe 7 ist in ihrer Länge so bemessen, dass diese im aufgeschobenen Zustand die Verbindungs- bzw. Lötstellen vollständig überdeckt. Nachfolgend wird die Kunststoffkappe mittels Heißluft mit ca. 100 °C aufgeschrumpft.

In Fig. 1, Abb. d), ist ein fertiger Rohrsondenabschnitt gezeigt.

Durch den Schrumpfvorgang schmiegt sich die taschenförmige Kunststoffkappe 7 fest an den U-förmigen Rohrsondenabschnitt an. Der noch verbleibende Freiraum wird mit Epoxidharz ausgegossen. Dadurch entsteht ein stabiler und sehr gut geschützter Erdwärmesondenfuß.

Abschließend wird der zwischenzeitlich abgewickelte Abschnitt der Kupferrohre wieder auf die Trommel aufgewickelt und die nunmehr fertige Erdwärmesonde für den Versand vorbereitet.

In an sich üblicher Weise können im Bereich der Sondenfußes noch Lochbohrungen für ein Absenkgewicht oder ein zentrisches Loch zur Aufnahme einer Führungsstange vorgesehen sein.

## Patentansprüche

1. Verfahren zur Herstellung von U-förmigen Erdwärmesonden, die direkt als Verdampfer an eine Wärmepumpe anschließbar sind, mit folgenden Verfahrensschritten:
a) zwei PE-ummantelte Kupferrohre (2, 3) in entsprechend vorgegebener Montagelänge werden synchron auf eine Trommel (1) aufgewickelt,
b) danach werden die beiden freien Enden der PE-ummantelten Kupferrohre (2, 3) abisoliert, sodass zwei blanke, abisolierte Kupferrohrendabschnitte (2a, 3a) entstehen,
c) entweder auf ein Ende oder auf jedes der Enden der Kupferrohre (2, 3) wird ein Schrumpfschlauchstück (4 oder 4a und 4b) aufgeschoben, derart, dass die abisolierten Endabschnitte (2a, 3a) der Kupferrohre frei bleiben,
d) auf die beiden blanken Kupferrohrendabschnitte (2a, 3a) wird ein separat hergestelltes U-förmiges Rohrstück (5) aus Kupfer geschoben, fixiert und druckdicht mit den Kupferrohrendabschnitten (2a, 3a) verbunden,
e) das Schrumpfschlauchstück (4) oder die Schrumpfschlauchstücke (4a, 4b) werden anschließend soweit zurückgeschoben, dass das U-förmige Rohrstück (5), die vorhandene PE-Ummantelung und die Verbindungsstellen (6) zwischen dem U-förmige Rohrstück (5) und den Enden der Kupferrohre (2, 3) vollständig mit den Schrumpfschlauchstücken (4 oder 4a und 4b) überdeckt werden,
f) anschließend werden die aufgezogenen Schrumpfschlauchstücke (4a, 4b) oder das Schrumpfschlauchstück (4) erwärmt und aufgeschrumpft,
g) danach wird auf den U-förmigen Rohrsondenabschnitt eine vorgefertigte Kunststoffkappe (7) aus schrumpfbarem Material bis zur Überdeckung der Verbindungsstellen (6) aufgeschoben und durch Erwärmung aufgeschrumpft,
h) der Innenraum der Kunststoffkappe (7) wird mit einem gießfähigen Kunststoffmaterial als Vergußmasse (8) ausgegossen und
i) nach erfolgter Aushärtung wird das restliche Ende der Kupferrohre (2, 3) der fertigen Erdwärmesonde wieder auf die Trommel (1) aufgewickelt.

2. Verfahren nach Anspruch 1, **dadurch gekennzeichnet, dass** bei Verwendung eines einzelnen Schrumpfschlauchstückes (4) dieses mindestens so lang ist, dass dieses im aufgezogenen Zustand das gesamte U-förmige Rohrstück (5) und die Verbindungsstellen zwischen dem Rohrstück (5) und den Enden der Kupferrohre (2, 3) sowie den Anfang der PE-Ummantelung vollständig umgibt.

3. Verfahren nach einem der Ansprüche 1 oder 2, **dadurch gekennzeichnet, dass** die Schrumpfschlauchstücke (4, 4a, 4b) an ihrer Innenseite mit einem Klebstoff beschichtet sind, der während des Schrumpfens flüssig wird und nach dem Erkalten eine dauerhafte Abdichtung zwischen der PE-Ummantelung, dem U-förmigen Rohrstück (5) und dem Schrumpfschlauchstück (4, 4a, 4b) bildet.

4. Verfahren nach einem der Ansprüche 1 bis 3, **dadurch gekennzeichnet, dass** die Enden des U-förmigen Rohrstückes (5) oder der abisolierten Kupferrohrendabschnitte (2a, 3a) passgenau aufgeweitet und Kupferrohrendabschnitte sowie U-förmiges Rohrstück miteinander verbunden werden.

5. Verfahren nach einem der Ansprüche 1 bis 3, **dadurch gekennzeichnet, dass** die Enden des U-förmigen Rohrstückes (5) und der abisolierten Kupferrohrendabschnitte (2a, 3a) mittels einer Muffe oder Hülse (9) verbunden werden.

6. Verfahren nach einem der Ansprüche 1 bis 3, **dadurch gekennzeichnet, dass** der Innendurchmesser des U-förmigen Rohrstückes (5) größer ist als der Außendurchmesser der Kupferrohrendabschnitte (2a, 3a) und die Enden des U-förmigen Rohrstückes passgenau auf die blanken Kupferohrendabschnitte aufgeschoben und miteinander verbunden werden.

7. Verfahren nach einem der Ansprüche 1 bis 6, **dadurch gekennzeichnet, dass** die Wanddicke des U-förmigen Rohrstückes (5) bis zu 20 % größer ist als die Wanddicke der Kupferrohrendabschnitte (2a, 3a).

8. Verfahren nach einem der Ansprüche 1 bis 7, **dadurch gekennzeichnet, dass** die Wanddicke des ummantelten Kupferrohres in Abhängigkeit vom auftretenden Rohrinnendruck bestimmt wird.

9. Verfahren nach einem der Ansprüche 1 bis 8, **dadurch gekennzeichnet, dass** die Schrumpfschlauchstücke (4, 4a, 4b) aus einem Polyolefin besteht.

10. Verfahren nach einem der Ansprüche 1 bis 9, **dadurch gekennzeichnet, dass** Kunststoffkappe (7) und Schrumpfschlauchstücke (4, 4a, 4b) aus demselben Material bestehen.

11. Verfahren nach einem der Ansprüche 1 bis 10, **dadurch gekennzeichnet, dass** die Vergußmasse (8) aus Polyester- oder Epoxidharz besteht.

12. Verfahren nach einem der Ansprüche 1 bis 11, **dadurch gekennzeichnet, dass** die Verbindungen zwischen dem U-förmigen Rohrstück (5) und den blanken Kupferrohrendabschnitten (2a, 3a) mittels Schweißen, Löten oder Crimpen vorgenommen werden.

13. Verfahren nach einem der Ansprüche 1 bis 12, **dadurch gekennzeichnet, dass** die PE-ummantelung auf dem Medium abführenden Kupferrohr einen höheren Wärmewiderstand als die Kunststoffummantelung auf dem Medium zuführenden Kupferrohr aufweist.

14. Verfahren nach einem der Ansprüche 1 bis 13, **dadurch gekennzeichnet, dass** das U-förmige Rohrstück aus einer Kupferlegierung hergestellt wird, die im Vergleich zu der Kupferlegierung der Kupferrohre eine höhere Verschleißbeständigkeit besitzt.

15. Verfahren nach einem der Ansprüche 1 bis 14, **dadurch gekennzeichnet, dass** das Erwärmen des oder der Schrumpfschlauchstücke (4, 4a, 4b) und der Kunststoffkappe (7) mittels Heißluft vorgenommen wird.

## Claims

1. A method for manufacturing U-shaped downhole heat exchangers that are directly connectable, as an evaporator, to a heat pump, with the following method steps:
a) two PE coated copper pipes (2, 3) of a suitable predetermined installation length are synchronously rolled up onto a drum (1),
b) the two free ends of the PE-coated copper pipes (2, 3) are stripped, so that two uncoated, stripped copper pipe end sections (2a, 3a) are formed,
c) a piece of heat-shrink tubing (4 or 4a and 4b) is slid either onto one end or onto each one of the ends of the copper pipes (2, 3) in such a manner that the stripped end sections (2a, 3a) of the copper pipes remain uncovered,
d) a separately manufactured U-shaped pipe section (5) made of copper is slid onto the two uncoated copper pipe end sections (2a, 3a), fixed thereto and connected in a pressure-tight manner with the copper pipe end sections (2a, 3a),
e) the piece of heat-shrink tubing (4) or the pieces of heat-shrink tubing (4a, 4b) are then pushed back until the U-shaped pipe section (5), the provided PE-coating and the junctions (6) between the U-shaped pipe section (5) and the ends of the copper pipes (2, 3) are completely covered by the pieces of heat-shrink tubing (4 or 4a and 4b),
f) the slid-on pieces of heat-shrink tubing (4a, 4b) or the piece of heat-shrink tubing (4) are then heated and shrunk,
g) a pre-fabricated plastic cap (7) made of a shrinkable material is then slid onto the U-shaped pipe probe section until the junctions (6) are covered and shrunk by heating,
h) the interior space of the plastic cap (7) is filled with a castable plastic material as a casting compound (8) and
i) after curing, the remaining end of the copper pipes (2, 3) of the completed downhole heat exchanger is rolled up again onto the drum (1).

2. The method according to claim 1, **characterized in that** when a single piece of heat-shrink tubing (4) is used, it is at least long enough, in the slid-on state, to completely enclose the entire U-shaped pipe section (5) and the junctions between the pipe section (5) and the ends of the copper pipes (2, 3), as well as the beginning of the PE-coating.

3. The method according to one of the claims 1 or 2, **characterized in that** the pieces of heat-shrink tubing (4, 4a, 4b) are coated, on their inner side, with an adhesive, which becomes liquid during shrinking and, after cooling down, forms a permanent seal between the PE-coating, the U-shaped pipe section (5) and the piece of heat-shrink tubing (4, 4a, 4b).

4. The method according to one of the claims 1 to 3, **characterized in that** the ends of the U-shaped pipe section (5) or of the stripped copper pipe end sections (2a, 3a) are widened so as to fit accurately and the copper pipe end sections and the U-shaped pipe section are connected to each other.

5. The method according to one of the claims 1 to 3, **characterized in that** the ends of the U-shaped pipe section (5) and of the stripped copper pipe end sections (2a, 3a) are connected by means of a socket or a sleeve (9).

6. The method according to one of the claims 1 to 3, **characterized in that** the inner diameter of the U-shaped pipe section (5) is greater than the outer diameter of the copper pipe end sections (2a, 3a) and that the ends of the U-shaped pipe section are slid onto the uncoated copper pipe end sections in an accurately fitting manner and connected with each other.

7. The method according to one of the claims 1 to 6, **characterized in that** the wall thickness of the U-shaped pipe section (5) is up to 20% greater than the wall thickness of the copper pipe end sections (2a, 3a).

8. The method according to one of the claims 1 to 7, **characterized in that** the wall thickness of the coated copper pipe is determined as a function of the pressure occurring inside the pipe.

9. The method according to one of the claims 1 to 8, **characterized in that** the pieces of heat-shrink tubing (4, 4a, 4b) are made of a polyolefin.

10. The method according to one of the claims 1 to 9, **characterized in that** the plastic cap (7) and the pieces of heat-shrink tubing (4, 4a, 4b) are made of the same material.

11. The method according to one of the claims 1 to 10, **characterized in that** the casting compound (8) consists of polyester or epoxy resin.

12. The method according to one of the claims 1 to 11, **characterized in that** the junctions between the U-shaped pipe section (5) and the uncoated copper pipe end sections (2a, 3a) are made by welding, soldering or crimping.

13. The method according to one of the claims 1 to 12, **characterized in that** the PE-coating on the copper pipe discharging the medium has a greater heat resistance than the plastic coating on the copper pipe supplying the medium.

14. The method according to one of the claims 1 to 13, **characterized in that** the U-shaped pipe section is made of a copper alloy, which has a higher resistance to wear compared to the copper alloy of the copper pipes.

15. The method according to one of the claims 1 to 14, **characterized in that** the heating of the piece or pieces of heat-shrink tubing (4, 4a, 4b) and of the plastic cap (7) is carried out using hot air.

## Revendications

1. Procédé de fabrication de sondes géothermiques en forme de U pouvant être directement connectée en tant qu'évaporateur à une pompe à chaleur comprenant les étapes suivantes :
a) deux longueurs adéquates prédéterminées de tubes en cuivre revêtu de polyéthylène (2, 3) sont enroulées de manière synchrone sur un tambour (1),
b) les deux extrémités libres des tubes en cuivre revêtu de polyéthylène (2, 3) sont ensuite dénudés, de manière à former deux parties d'extrémité de tube en cuivre (2a, 3a) nues dénudées,
c) une section de gaine thermorétractable (4 ou 4a et 4b) est enfilée soit sur une extrémité ou sur chacune des extrémités des tubes en cuivre (2, 3), de telle manière que les parties d'extrémité dénudées (2a, 3a) des tubes en cuivre restent exposées,
d) une section de tube en cuivre en forme de U (5) fabriquée séparément est glissée et fixée sur les deux parties d'extrémité nues de tube en cuivre (2a, 3a) et reliée de façon étanche à la pression avec les parties d'extrémité de tube en cuivre (2a, 3a),
e) la section de gaine thermorétractable (4) ou les sections de gaine thermorétractable (4a, 4b) sont ensuite rétractées jusqu'à ce que la section de tube en forme de U (5), le revêtement de polyéthylène et les jonctions (6) entre la section de tube en forme de U (5) et les extrémités des tubes en cuivre (2, 3) soient entièrement recouvertes par les sections de gaine thermorétractable (4 ou 4a et 4b),
f) les sections de gaine thermorétractable (4a, 4b) ou la section de gaine thermorétractable (4) enfilées sont ensuite chauffées et thermorétractées,
g) un capuchon en plastique (7) préfabriqué en un matériau rétractable est ensuite enfilé sur la section de sonde tubulaire en forme de U jusqu'à recouvrir les jonctions (6) et rétracté par chauffage,
h) l'espace intérieur du capuchon en plastique (7) est rempli avec une matière plastique coulable en tant que masse de coulée (8)
i) et après durcissement, l'extrémité restante des tubes en cuivre (2, 3) de la sonde géothermique achevée est à nouveau enroulé sur le tambour (1).

2. Procédé selon la revendication 1, **caractérisé en ce que** lorsqu'une seule section de gaine thermorétractable (4) est utilisée, celle-ci est au moins suffisamment longue, à l'état enfilé, pour entourer entièrement la totalité de la section de tube en forme de U (5) et les jonctions entre la section de tube (5) et les extrémités des tubes en cuivre (2, 3) ainsi que le début du revêtement en polyéthylène.

3. Procédé selon l'une des revendications 1 ou 2, **caractérisé en ce que** les sections de gaine thermorétractable (4, 4a, 4b) sont enduites sur leur côté intérieur d'un adhésif qui devient liquide pendant la thermorétraction et qui réalise, après refroidissement, une étanchéité permanente entre le revêtement en polyéthylène, la section de tube en forme de U (5) et la section de gaine thermorétractable (4, 4a, 4b).

4. Procédé selon l'une des revendications 1 à 3, **caractérisé en ce que** les extrémités de la section de tube en forme de U (5) ou des parties d'extrémité dénudées du tube en cuivre (2a, 3a) sont élargies sur mesure et que les parties d'extrémité du tube en cuivre et la section de tube en forme de U sont reliées les unes aux autres.

5. Procédé selon l'une des revendications 1 à 3, **caractérisé en ce que** les extrémités de la section de tube en forme de U (5) et les parties d'extrémité dénudées du tube en cuivre (2a, 3a) sont reliées au moyen d'un manchon ou d'une douille (9).

6. Procédé selon l'une des revendications 1 à 3, **caractérisé en ce que** le diamètre intérieur de la section de tube en forme de U (5) est plus grand que le diamètre extérieur des parties d'extrémité du tube en cuivre (2a, 3a) et que les extrémités de la section de tube en forme de U sont enfilées sur mesure sur les parties d'extrémité nues du tube en cuivre et reliées les unes au autres.

7. Procédé selon l'une des revendications 1 à 6, **caractérisé en ce que** l'épaisseur de paroi de la section de tube en forme de U (5) est jusqu'à 20% plus grande que l'épaisseur de paroi des parties d'extrémité du tube en cuivre (2a, 3a).

8. Procédé selon l'une des revendications 1 à 7, **caractérisé en ce que** l'épaisseur de paroi du tube en cuivre revêtu est déterminée en fonction de la pression intérieure survenant dans le tube.

9. Procédé selon l'une des revendications 1 à 8, **caractérisé en ce que** les sections de gaine thermorétractable (4, 4a, 4b) sont en une polyoléfine.

10. Procédé selon l'une des revendications 1 à 9, **caractérisé en ce que** le capuchon en plastique (7) et les sections de gaine thermorétractable (4, 4a, 4b) sont composées du même matériau.

11. Procédé selon l'une des revendications 1 à 10, **caractérisé en ce que** la masse de coulée (8) est composée d'une résine polyester ou d'une résine epoxy.

12. Procédé selon l'une des revendications 1 à 11, **caractérisé en ce que** les jonctions entre la section de tube en forme de U (5) et les parties d'extrémité nues du tube en cuivre (2a, 3a) sont réalisées par soudure, brasage ou sertissage.

13. Procédé selon l'une des revendications 1 à 12, **caractérisé en ce que** le revêtement en polyéthylène du tube en cuivre évacuant le milieu a une résistance à la chaleur plus élevée que le revêtement plastique du tube en cuivre amenant le milieu.

14. Procédé selon l'une des revendications 1 à 13, **caractérisé en ce que** la section de tube en forme de U est fabriquée en un alliage de cuivre qui présente une résistance à l'usure plus élevée que l'alliage de cuivre des tubes en cuivre.

15. Procédé selon l'une des revendications 1 à 14, **caractérisé en ce que** le chauffage de la ou des sections de gaine thermorétractable (4, 4a, 4b) et du capuchon en plastique (7) est réalisé avec de l'air chaud.
